# EUROPÄISCHE PATENTANMELDUNG

(11) **EP 3 581 479 A1**
(43) Veröffentlichungstag der Anmeldung: **18.12.2019**
(21) Anmeldenummer: 19178661.5
(22) Anmeldetag: 06.06.2019
(51) Int. Cl.: B62L 1/04, B62L 3/00, B62K 9/00, B62H 7/00, B60T 1/04, B60T 7/16

(54) **FERNGESTEUERTE BREMSVORRICHTUNG FÜR INSBESONDERE MUSKELBETRIEBENE UND/ODER ROLLENDE FAHRZEUGE SOWIE VERFAHREN ZUR BETÄTIGUNG UND/ODER AUSLÖSUNG DER BREMSVORRICHTUNG**

(30) Priorität: 15.06.2018 DE 102018114452
(71) Anmelder: Lyschick, Sebastian, 93138 Lappersdorf (DE); Stangl, Daniel, 93059 Regensburg (DE)
(72) Erfinder: Lyschick, Sebastian, 93138 Lappersdorf (DE); Stangl, Daniel, 93059 Regensburg (DE)
(74) Vertreter: Benninger, Johannes

(57) **Zusammenfassung**

Es ist eine ferngesteuerte Bremsvorrichtung (32) für zumindest zwei- oder mehrrädrige Fahrzeuge offenbart. Die Bremsvorrichtung (32) umfasst zumindest eine an einem Rahmen (22) des Fahrzeuges angeordnete Führungsbahn (34), welche in Laufrichtung (L) zur Lauffläche zumindest eines Rades des Fahrzeuges vorgeordnet ist, sowie zumindest ein Bremselement (36), welches in Laufrichtung (L) zwischen der Lauffläche des zumindest einen Rades und der zumindest einen Führungsbahn (34) beweglich angeordnet ist. Das zumindest eine Bremselement (36) gibt in einer arretierten Position das zumindest eine Rad frei. Mittels einer Fernsteuerung ist das zumindest eine Bremselement (36) aus der arretierten Position lösbar, so dass das zumindest eine Bremselement (36) entlang der Führungsbahn (34) und der Lauffläche des Rades gleitet und eine Bremskraft auf das zumindest eine Rad des Fahrzeuges ausübt.

Weiter ist ein Fahrzeug vorgesehen, welches mit einer ferngesteuerten Bremsvorrichtung (32) ausgestattet ist.

## Beschreibung

Die vorliegende Erfindung betrifft eine ferngesteuerte Bremsvorrichtung mit den Merkmalen im Anspruch 1, ein Verfahren zur Durchführung eines ferngesteuerten Bremsvorganges eines Fahrzeuges mit den Merkmalen im Anspruch 11 sowie ein Fahrzeug mit den Merkmalen des Anspruchs 13.

Zwei- oder mehrrädrige Fahrzeuge, wie beispielsweise Laufräder, Dreiräder, Roller, Fahrräder, sind in der Regel mit einer Bremsvorrichtung ausgestattet. Bei den bisher eingesetzten Bremsvorrichtungen handelt es sich meistens um Rücktrittbremsen oder um Felgen- und/oder um Scheibenbremsen. Um eine Bremsung mittels einer Rücktrittbremse durchzuführen, ist ein Rückwärtstreten der Pedale des jeweiligen Fahrzeuges erforderlich, wodurch das Drehmoment durch einen unbewegten Hebel, die Drehmomentstütze, auf den Rahmen übertragen wird. Bei Felgen- und/oder Scheibenbremsen sind in der Regel am Lenker Bremshebel vorgesehen, welche zum Bremsen gedrückt werden müssen. Da Rücktrittbremsen und/oder Bremshebeln zum Bremsen eines jeweiligen Fahrzeuges für Kinder größtenteils nur schwer zu bedienen und/oder zu betätigen sind, besteht ein erhöhtes Risiko, dass diese beispielsweise bei zu hoher Geschwindigkeit und/oder bei Gefahrensituationen nicht rechtzeitig oder überhaupt nicht bremsen können. Auch können Kinder, insbesondere Kleinkinder, Gefahren und/oder Risiken, die sich beispielsweise im Straßenverkehr oder bei steil abfallenden Straßen und/oder Wegen ergeben können, nur schlecht einschätzen. Um rechtzeitig einzugreifen und/oder um Unfälle oder dergleichen zu vermeiden, sind aus dem Stand der Technik ferngesteuerte Bremsvorrichtungen bekannt, welche durch den Erwachsenen oder durch Dritte betätigt werden können.

Durch die WO 2007/143203 A2 und die DE 100 17 576 A1 ist jeweils eine ferngesteuerte Bremsvorrichtung beschrieben. Bei der Bremsvorrichtung handelt es sich jeweils um eine Felgenbremse, welche sowohl am Vorder- als auch am Hinterrad des Fahrrades vorgesehen sein kann. Die Felgenbremse steht mit einem Funksender oder dergleichen in Verbindung und leitet nach Erhalt eines entsprechenden Signals vom Funksender einen Bremsvorgang ein. Derartige Bremsvorrichtungen haben sich jedoch dahingehend als nachteilig erwiesen, da zur Durchführung des Bremsvorgangs große Betätigungskräfte erforderlich sind und aufgebracht werden müssen, um das jeweilige Fahrzeug über die Felgenbremse zum Stillstand zu bekommen.

Durch die EP 2 489 562 A1 ist eine weitere Ausführungsform einer ferngesteuerten Bremsvorrichtung für Fahrräder, Dreiräder oder dergleichen beschrieben. Die Bremsvorrichtung umfasst eine Bremskufe, welche über eine Halterung am Rahmen des Fahrrades montiert ist. Zusätzlich ist ein Aktor beispielsweise in Form eines Elektromotors vorgesehen, welcher ferngesteuert ausgebildet ist. Nach Ansteuerung des Aktors wird die Bremskufe in Richtung zur Lauffläche des Rades bewegt, wodurch ein Bremsvorgang eingeleitet wird. Auch diese Lösung hat sich in der Praxis als nachteilig erwiesen, da durch den Aktor große Betätigungskräfte aufgebracht werden müssen, um die Bremskufe auf der Lauffläche des Rades zur Durchführung einer Bremsung zu halten. Auch hat sich der Einsatz von Bremskufen dahingehend als nachteilig erwiesen, da diese sehr verschleißanfällig sind und einem hohen Abnutzungsgrad unterliegen.

Durch die WO 2009/040099 A1 ist eine weitere Ausführungsform einer ferngesteuerten Bremsvorrichtung für Fahrräder oder dergleichen beschrieben, welche ein über einen Tragarm am Rahmen des Fahrrades schwenkbar angeordnetes Bremselement umfasst. Das Bremselement kann verschiedene Positionen einnehmen. In einer ersten Position befindet sich das Bremselement in einer beabstandeten und arretierten Position zur Lauffläche des Fahrrades. Nach Betätigung einer Fernsteuerung wird das Bremselement aus der arretierten Position gelöst und fällt anschließend mittels Schwerkraft in Richtung Hinterrad. Anschließend wird ein Bremsvorgang eingeleitet, indem das Bremselement entlang der Lauffläche des Rades gleitet. Derartige Lösung hat sich jedoch dahingehend als nachteilig erwiesen, dass beispielsweise bei Verunreinigungen, Schmutz und/oder Rost ein Fallen des Bremselements in Richtung der Lauffläche verhindert wird, so dass folglich kein Bremsvorgang des Fahrrades durchgeführt werden kann.

Schiebbare Fahrzeuge, wie beispielsweise Einkaufswägen umfassen in der Regel keine Bremsvorrichtungen, während beispielsweise Kinderwägen mit einer manuell arretierbaren Fußbremse ausgestattet sind. Wenn solche Fahrzeuge unkontrolliert in Fahrt kommen bzw. unkontrolliert in Bewegung geraten, können diese nicht unter Kontrolle gebracht werden, da ein Eingreifen und/oder ein Bremsen solcher Fahrzeuge nicht ohne weiteres möglich ist.

Der Erfindung liegt daher die Aufgabe zugrunde, eine einfach aufgebaute ferngesteuerte Bremsvorrichtung für zumindest zwei- oder mehrrädrige Fahrzeuge zur Verfügung zu stellen, bei welcher zur Einleitung und Durchführung eines Bremsvorganges lediglich geringe Betätigungskräfte erforderlich sind. Des Weiteren soll ein Verfahren zur Durchführung eines ferngesteuerten Bremsvorganges auf einfache Art und Weise umgesetzt und durchgeführt werden. Zudem soll ein Fahrzeug zur Verfügung gestellt werden, welches mittels einer ferngesteuerten Bremsvorrichtung auf einfache Art und Weise abgebremst werden kann.

Diese Aufgaben werden durch eine ferngesteuerte Bremsvorrichtung für zumindest zwei- oder mehrrädrige Fahrzeuge mit den Merkmalen im Anspruch 1, durch ein Verfahren zur Durchführung eines ferngesteuerten Bremsvorganges mit den Merkmalen im Anspruch 11 sowie durch ein Fahrzeug mit den Merkmalen im Anspruch 13 gelöst. Weitere vorteilhafte Ausgestaltungen und Weiterbildungen der Erfindung sind in den jeweils abhängigen Ansprüchen angegeben.

Zur Lösung der genannten Aufgabe schlägt die Erfindung eine ferngesteuerte Bremsvorrichtung für zumindest zwei- oder mehrrädrige Fahrzeuge vor. Bei den zumindest zwei- oder mehrrädrigen Fahrzeugen kann es sich beispielsweise um Laufräder, Roller, Fahrräder, Dreiräder, Spielzeugautos, Rollstühle oder dergleichen handeln. Denkbar wäre auch, die ferngesteuerte Bremsvorrichtung bei schiebbaren Fahrzeugen, wie beispielsweise bei Einkaufswägen, Kinderwägen oder dergleichen einzusetzen.

Die Bremsvorrichtung umfasst zumindest eine an einem Rahmen des Fahrzeuges angeordnete Führungsbahn, welche in Laufrichtung zur Lauffläche zumindest eines Rades des Fahrzeuges vorgeordnet ist. Insbesondere ist zumindest eine Führungsbahn zur Lauffläche des zumindest einen Rades beabstandet angeordnet. Vorzugsweise kann es sich bei dem zumindest einen Rad des Fahrzeuges um dessen Hinterrad handeln.

Die Bremsvorrichtung umfasst weiter ein arretierbares und/oder aus einer arretierten Position lösbares Bremselement, welches in Laufrichtung zwischen der Lauffläche des zumindest einen Rads und der zumindest einen Führungsbahn beweglich angeordnet ist, wobei das zumindest eine Bremselement in seiner arretierten Position das Rad freigibt, und wobei das zumindest eine Bremselement aus der arretierten Position mittels Fernsteuerung lösbar ist, so dass das zumindest eine Bremselement entlang der zumindest einen Führungsbahn und der Lauffläche des zumindest einen Rades gleitet und eine Bremskraft auf das zumindest eine Rad des Fahrzeuges ausübt. Insbesondere kann das zumindest eine Bremselement eine Bremskraft auf das zumindest eine Rad ausüben, bis dieses zum Stillstand kommt.

Es kann vorgesehen sein, dass das zumindest eine Bremselement in der arretierten Position vorgespannt ist. Insbesondere kann das zumindest eine Bremselement mittels eines elastisch verformbaren Mittels vorgespannt sein. Bei dem elastisch verformbaren Mittel kann es sich beispielsweise um eine Feder oder dergleichen handeln.

Es kann vorgesehen sein, dass das zumindest eine Bremselement als Bremskeil oder als Bremsklotz ausgebildet ist. Insbesondere kann das zumindest eine Bremselement derart ausgebildet sein, dass sich dieser zwischen der Lauffläche des zumindest einen Rads und der zumindest einen Führungsfläche verkeilen kann, so dass das jeweilige Fahrzeug zum Stillstand kommen kann.

Es kann vorgesehen sein, dass die zumindest eine Führungsbahn zumindest weitgehend parallel zu einer Senkrechten angeordnet ist, welche Senkrechte zumindest weitgehend senkrecht durch eine Achse des zumindest einen Rades geht, d.h. die zumindest eine Führungsbahn kann zumindest weitgehend plan und/oder eben ausgebildet sein.

Alternativ kann vorgesehen sein, dass die zumindest eine Führungsbahn zumindest weitgehend tangential zur Lauffläche des zumindest einen Rades ausgebildet ist, so dass zwischen der zumindest einen Führungsbahn und der Lauffläche des zumindest einen Rades ein spitzer Winkel ausgebildet wird, d.h. die zumindest eine Führungsbahn kann eine schiefe Ebene aufweisen.

Weiter kann die Bremsvorrichtung ein Gehäuse umfassen, welches zumindest abschnittsweise um die zumindest eine Führungsbahn und das zumindest eine Bremselement angeordnet ist, d.h. die zumindest eine Führungsbahn und das zumindest eine Bremselement können zumindest abschnittsweise von einem Gehäuse umfasst und/oder aufgenommen sein. Das Gehäuse kann dazu dienen, die zumindest eine Führungsbahn und das Bremselement vor Schmutz, Verunreinigungen oder dergleichen zu schützen. Das Gehäuse kann zumindest teilweise offen ausgebildet sein, wobei vorzugsweise die zum zumindest einen Rad gewandte Seite des Gehäuses offen ausgebildet ist. Wahlweise kann vorgesehen sein, dass das Gehäuse zumindest eine Aussparung oder dergleichen umfasst.

Die zumindest teilweise offene Ausbildung des Gehäuses und/oder die Aussparungen im Gehäuse oder dergleichen können deshalb erforderlich sein, damit das zumindest eine Bremselement bei entsprechender Ansteuerung in Oberflächenkontakt mit dem zumindest einen Rad kommen kann und entlang der Lauffläche des zumindest einen Rades und der Führungsbahn gleiten kann, wodurch eine Bremskraft auf das zumindest eine Rad erzeugt wird.

Weiter kann vorgesehen sein, dass die Bremsvorrichtung wenigstens eine Haltevorrichtung umfasst, mittels welcher das zumindest eine Bremselement und/oder die zumindest eine Führungsbahn und/oder das Gehäuse am Rahmen des Fahrzeuges angeordnet, insbesondere befestigt, sind. Wahlweise wäre es auch denkbar, dass zumindest eine Bremselement und/oder die zumindest eine Führungsbahn am Gehäuse zu befestigen, welches Gehäuse mittels der wenigstens einen Haltevorrichtung am Rahmen des Fahrzeuges befestigt ist. Hierfür können lösbare Verbindungen, wie bspw. Schraubverbindungen oder dergleichen denkbar sein. Die Verwendung von lösbaren Verbindungen kann deshalb von Vorteil sein, um das zumindest eine Bremselement und/oder die zumindest eine Führungsbahn bei Verschleiß auf einfache Art und Weise wechseln und/oder austauschen zu können.

Die wenigstens eine Haltevorrichtung kann vorzugsweise lösbar am Rahmen des Fahrzeuges angeordnet sein. Wahlweise kann die wenigstens eine Haltevorrichtung unlösbar am Rahmen des Fahrzeuges angeordnet sein. Die wenigstens eine Haltevorrichtung kann mittels zumindest einer kraft-, form- und/oder stoffschlüssigen Verbindung am Rahmen des Fahrzeuges befestigt sein. Eine zumindest kraft- und/oder formschlüssige Verbindung kann beispielsweise Schraub-, Niet- und/oder Klemmverbindungen oder dergleichen umfassen. Eine zumindest stoffschlüssige Verbindung kann beispielsweise Löt-, Schweiß- und/oder Klebverbindungen oder dergleichen umfassen.

Vorzugsweise kann die Haltevorrichtung lösbar mittels einer Schrauben-Mutterverbindung am Rahmen des Fahrzeuges angeordnet und/oder befestigt sein. Die Schraubverbindung kann durch wenigstens eine Schraube gebildet werden, welche durch den Rahmen des Laufrades führbar ist. Zum Arretieren kann wenigstens eine Mutter vorgesehen sein, welche von der wenigstens einen Schraube aufgenommen werden kann.

Weiter kann vorgesehen sein, dass die erfindungsgemäße Bremsvorrichtung eine Funksteuerung umfasst, welche zumindest eine Empfängereinheit und zumindest eine Sendeeinheit umfasst. Die zumindest eine Empfängereinheit kann dem zumindest einen Bremselement, vorzugsweise dem elastisch verformbaren Mittel zugeordnet sein. Die zumindest eine Sendeeinheit kann mit der zumindest einen Empfängereinheit drahtlos verbunden sein und/oder drahtlos kommunizieren. Die drahtlose Verbindung bzw. die drahtlose Kommunikation kann vorzugsweise auf Funk, Wifi, Bluetooth oder dergleichen basieren. Die zumindest eine Sendeeinheit kann durch eine tragbare Bedieneinheit mit zumindest einem Bedienelement und/oder Touchdisplay ausgebildet sein.

Durch ein entsprechendes Bedienen der tragbaren Bedieneinheit kann ein Signal ausgelöst werden, welches Signal von der zumindest einen Empfängereinheit aufgenommen und verarbeitet werden kann, so dass das zumindest eine Bremselement aus der arretierten Position gelöst wird und eine Bremskraft auf das zumindest eine Rad des Fahrzeuges ausübt, indem es entlang der zumindest einen Führungsbahn und/oder der Lauffläche des zumindest einen Rades gleitet bzw. in dem es zwischen der zumindest einen Führungsbahn und/oder der Lauffläche des zumindest einen Rades verkeilt.

Die Erfindung betrifft weiter ein Verfahren zum Einleiten und/oder Durchführung eines ferngesteuerten Bremsvorganges eines zumindest zwei- oder mehrrädrigen Fahrzeuges. Bei dem zumindest zwei- oder mehrrädrigen Fahrzeug kann es sich beispielsweise um ein Laufrad, einen Roller, ein Fahrrad, ein Dreirad, ein Spielzeugauto, einen Rollstuhl oder dergleichen handeln. Es wäre auch denkbar, die ferngesteuerte Bremsvorrichtung bei schiebbaren Fahrzeugen, wie beispielsweise bei Einkaufswägen, Kinderwägen oder dergleichen einzusetzen.

In einem ersten Schritt wird zumindest eine Führungsbahn an einem Rahmen des Fahrzeuges angeordnet, welche in Laufrichtung zur Lauffläche zumindest eines Rades des Fahrzeuges vorgeordnet, insbesondere beabstandet angeordnet ist.

In einem zweiten Schritt erfolgen ein Vorspannen und/oder Arretieren zumindest eines Bremselements, welches in Laufrichtung zwischen der Lauffläche des zumindest einen Rades und der zumindest einen Führungsbahn angeordnet ist, wobei das vorgespannte und/oder arretierte Bremselement das Rad freigibt.

In einem nächsten Schritt erfolgt das Einleiten eines Bremsvorgangs durch Betätigen einer Fernsteuerung, so dass das zumindest eine Bremselement aus der vorgespannten und/oder arretierten Position gelöst wird und entlang der zumindest einen Führungsbahn und der Lauffläche des zumindest einen Rades gleitet. Dabei kann das zumindest eine Bremselement eine Bremskraft auf das zumindest eine Rad des Fahrzeuges ausüben, d.h. das zumindest eine Bremselement kann sich zwischen der zumindest einen Führungsbahn und der Lauffläche des zumindest einen Rads verkeilen, wobei die Bremskraft vorzugsweise so lange auf das zumindest eine Rad des Fahrzeuges ausgeübt wird, bis dieses zum Stillstand kommt.

Um das zumindest eine Rad des Fahrzeuges wieder freigeben zu können, kann das zumindest eine Bremselement zeitlich nach einem Bremsvorgang manuell vorgespannt und/oder arretiert werden. Wahlweise kann das Vorspannen und/oder Arretieren des zumindest einen Bremselements auch automatisch erfolgen.

Hinsichtlich aller oben erwähnten Aspekte und Ausführungsvarianten der erfindungsgemäßen ferngesteuerten Bremsvorrichtung, sei an dieser Stelle darauf hingewiesen, dass diese Aspekte und Charakteristika gleichermaßen Teil des erfindungsgemäßen Verfahrens zur Einleitung und/oder Durchführung eines ferngesteuerten Bremsvorganges oder Anwendung auf das erfindungsgemäße Verfahren finden können. Wenn daher an irgend einer Stelle der obigen Beschreibung von bestimmten Aspekten und Varianten der ferngesteuerten Bremsvorrichtung die Rede ist, so sind diese Aspekte und Ausführungsvarianten gleichermaßen auf das Verfahren zur Einleitung und/oder Durchführung eines ferngesteuerten Bremsvorgangs zu lesen und sollen auch in dieser Weise verstanden werden.

Die Erfindung betrifft zudem ein Fahrzeug, insbesondere Laufrad, Fahrrad, Dreirad, Roller, Kinderwagen oder Einkaufswagen, welches mit einer ferngesteuerten Bremsvorrichtung gemäß Anspruch 1 ausgestattet ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1A zeigt in einer schematischen Ansicht ein Laufrad mit einer ferngesteuerten Bremsvorrichtung, wobei das Bremselement arretiert und/oder vorgespannt ist.
Figur 1B zeigt in einer schematischen Ansicht ein Laufrad mit einer ferngesteuerten Bremsvorrichtung, wobei das Bremselement aus der Arretierung gelöst ist.
Figur 2 zeigt in einer schematischen Ansicht eine Detailansicht der ferngesteuerten Bremsvorrichtung.
Figur 3 verdeutlicht einzelne Schritte zur Einleitung und/oder Durchführung eines Bremsvorgangs eines erfindungsgemäßen Verfahrens.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die ferngesteuerte Bremsvorrichtung und das Verfahren zur Einleitung und/oder Durchführung eines ferngesteuerten Bremsvorganges ausgestaltet sein können und stellen keine abschließende Begrenzung dar.

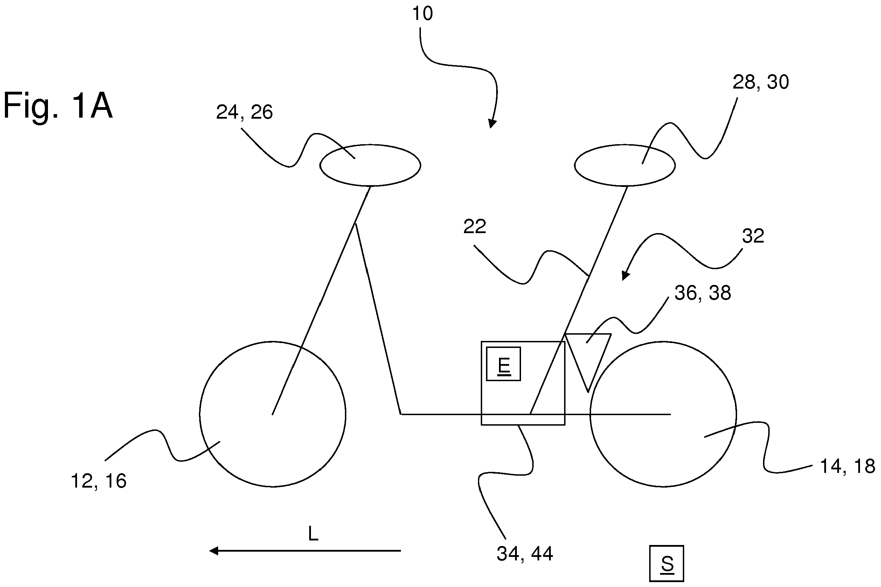

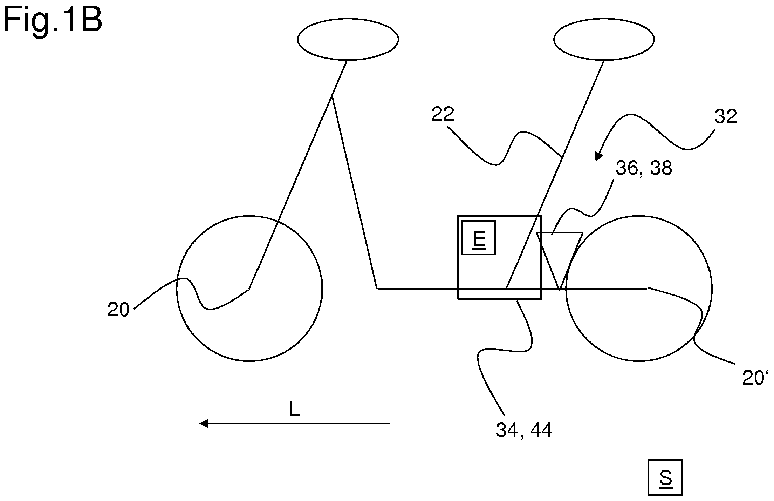

Die Figuren 1A und 1B zeigen in einer schematischen Ansicht ein Laufrad 10 für Kleinkinder und/oder Kinder. Das Laufrad 10 umfasst einen Rahmen 22, an welchem Rahmen 22 zwei Räder 12, 14, insbesondere ein Vorderrad 16 und ein Hinterrad 18 gelagert sind. Das Vorderrad 16 und das Hinterrad 18 weisen jeweils eine Achse 20, 20' auf.

Am Rahmen 22 ist eine Lenkeinheit 24 vorgesehen, welche durch einen Lenker 26 ausgebildet ist. Der Lenker 26 dient dazu, um das Laufrad 10 in eine bestimmte Richtung lenken zu können. Weiter ist am Rahmen 22 eine Sitzfläche 28 vorgesehen, welche durch einen Sattel 30 ausgebildet ist.

Damit Erwachsene bei Gefahrensituationen rechtzeitig eingreifen und das Laufrad 10 entsprechend abbremsen können, ist das Laufrad 10 mit einer ferngesteuerten Bremsvorrichtung 32 ausgestattet. Die Bremsvorrichtung 32 umfasst eine Führungsbahn 34, welche am Rahmen 22 des Laufrades 10 ortsfest angebracht ist. Die Führungsbahn 34 ist dabei derart am Rahmen 22 des Laufrades 10 angebracht, dass die Führungsbahn 34 in Laufrichtung L beabstandet zur Lauffläche des Hinterrades 18 angeordnet ist, d.h. die Bremsvorrichtung 32 ist dem Hinterrad 18 in Laufrichtung L vorgeordnet. Vorzugsweise ist die Führungsbahn 34 über eine Haltevorrichtung 44 am Rahmen 22 des Laufrades 10 befestigt.

Die Bremsvorrichtung 32 umfasst weiter zumindest ein Bremselement 36, welches in Laufrichtung L zwischen der Lauffläche des Hinterrades 18 und der Führungsbahn 34 angeordnet ist. Das Bremselement 36 ist als Bremskeil 38 ausgebildet.

Gemäß Figur 1A befindet sich der Bremskeil 38 in einer arretierten und/oder vorgespannten Position und blockiert das Hinterrad 18 nicht, d.h. der Bremskeil 38 gibt das Hinterrad 18 frei.

Gemäß Figur 1B ist der Bremskeil 38 aus der arretierten Position gelöst, so dass der Bremskeil 38 entlang der Führungsbahn 34 und der Lauffläche des Hinterrades 18 gleitet. Dabei verkeilt sich der Bremskeil 38 zwischen der Führungsbahn 34 und der Lauffläche des Hinterrades 18, so dass eine Bremskraft auf das Hinterrad 18 ausgeübt wird.

Das Lösen des Bremskeils 38 aus der arretierten bzw. vorgespannten Position erfolgt über eine Fernsteuerung. Hierzu umfasst die Bremsvorrichtung 32 eine Empfängereinheit E und eine Sendeeinheit S, die drahtlos, beispielsweise per Funk miteinander kommunizieren können bzw. drahtlos miteinander verbunden sind.

Die Empfängereinheit E ist dem Bremskeil 38 zugeordnet. Bei der Sendeeinheit S handelt es sich um eine hier nicht dargestellte tragbare Bedieneinheit, welche mit einer Bedientaste ausgebildet ist. Durch Drücken der Bedientaste wird ein Signal ausgelöst, welches von der Empfängereinheit E aufgenommen und verarbeitet wird, so dass aufgrund dessen die Arretierung des Bremskeils 38 gelöst wird und ein Bremsvorgang eingeleitet wird, indem sich der Bremskeil 38 zwischen der Lauffläche des Hinterrades 18 und der Führungsbahn 34 verkeilt.

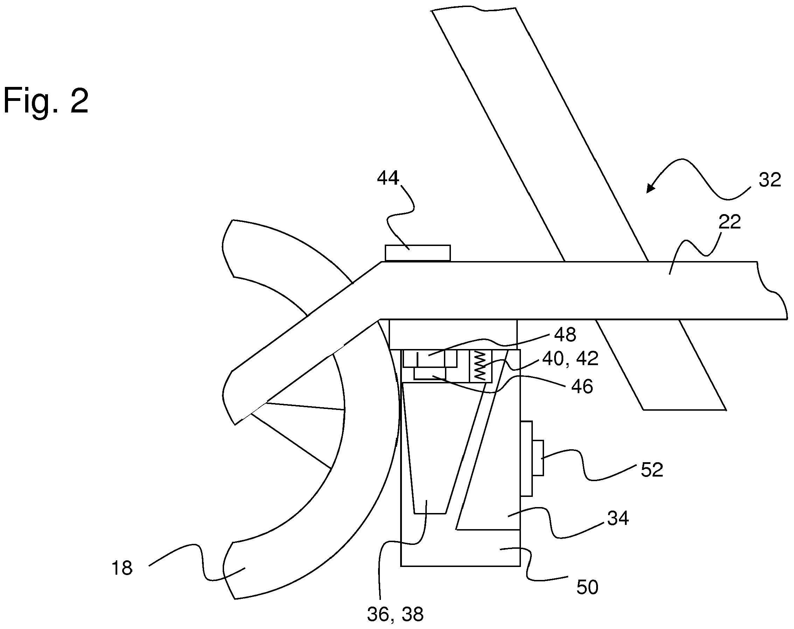

In der Figur 2 ist eine Detailansicht einer Ausführungsform einer ferngesteuerten Bremsvorrichtung 32 und dessen Komponenten dargestellt. Die Bremsvorrichtung 32 umfasst eine Führungsbahn 34, welche am Rahmen 22 des Laufrades 10 ortsfest befestigt ist. Die Führungsbahn 34 ist dabei derart am Rahmen 22 des Laufrades 10 angebracht, dass die Führungsbahn 34 in Laufrichtung L beabstandet zur Lauffläche des Hinterrades 18 angeordnet ist, d.h. die Bremsvorrichtung 32 ist dem Hinterrad 18 in Laufrichtung L vorgeordnet.

Gemäß vorliegender Ausführungsform bildet die Führungsbahn 34 eine schiefe Ebene aus und ist zumindest weitgehend tangential zur Lauffläche des zumindest einen Rades ausgebildet ist, so dass zwischen der Führungsbahn 34 und der Lauffläche des Hinterrades 18 ein spitzer Winkel ausgebildet wird.

In Laufrichtung L ist zwischen der Führungsbahn 34 und der Lauffläche des Hinterrades 18 ein Bremselement 36 in Form eines Bremskeils 38 vorgesehen. Der Bremskeil 38 befindet sich in einer arretierten und/oder vorgespannten Position, so dass das Hinterrad 18 rollen kann. Die arretierte Position wird über ein elastisch verformbares Mittel 40 erreicht, welches durch eine Feder 42 ausgebildet ist. Durch eine Fernsteuerung löst sich der Bremskeil 38 aus der arretierten bzw. vorgespannten Position, indem die Feder 42 freigegeben wird, so dass der Bremskeil 38 entlang der Führungsbahn 34 und der Lauffläche des Hinterrades 18 gleitet und sich zwischen diesen beiden Elementen verkeilt.

Die Bremsvorrichtung 32 umfasst eine Haltevorrichtung 44, mittels welcher die Führungsbahn 34 und der Bremskeil 38 am Rahmen 22 des Laufrades 10 befestigt werden. Die Haltevorrichtung 44 ist lösbar mittels einer Schrauben-Mutterverbindung am Rahmen 22 des Laufrads 10 befestigt. Die Schraubverbindung wird durch eine Schraube 46 gebildet, welche durch den Rahmen 22 des Laufrads 10 geführt ist. Zum Arretieren ist eine Mutter 48 vorgesehen, welche von der Schraube 46 aufgenommen ist.

Zum Schutz vor Verschmutzungen ist ein Gehäuse 50 vorgesehen, welches zumindest abschnittsweise um den Bremskeil 38 und um die Führungsbahn 34 angeordnet ist. Das Gehäuse 50 ist mit der zum Hinterrad 18 gewandten Seite offen ausgebildet, so dass der Bremskeil 38 bei entsprechender Ansteuerung entlang der Lauffläche des Hinterrades 18 und der Führungsbahn 34 gleiten kann.

Der Bremskeil 38 ist mittels des elastisch verformbaren Mittels 40, insbesondere mittels der Feder 42 an die Haltevorrichtung 44 montiert. Insbesondere dient die Feder 42 jedoch dazu, den Bremskeil 38 zu arretieren und/oder vorzuspannen. Das Gehäuse 50 und die Führungsbahn 34 sind über hier nicht dargestellte Schraubverbindungen an die Haltevorrichtung 44 montiert. Zusätzlich ist die Führungsbahn 34 über eine weitere Schraubverbindung am Gehäuse 50 montiert, welche weitere Schraubverbindung durch eine weitere Schraube 52 ausgebildet ist.

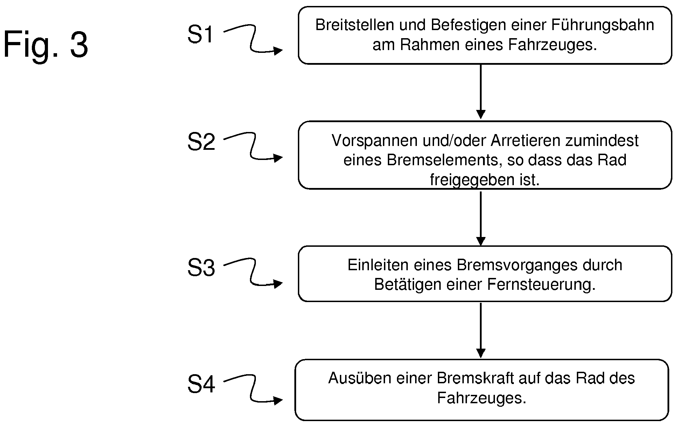

In der Figur 3 sind einzelne Schritte zur Einleitung und/oder Durchführung eines Bremsvorgangs bei einem Fahrzeug, insbesondere bei einem Laufrad 10 offenbart, wie es in den Figuren 1A, 1B und 2 beispielhaft dargestellt ist. In einem ersten Schritt S1 wird eine Führungsbahn 34 bereitgestellt und am Rahmen 22 eines Laufrads 10 ortsfest angeordnet, wobei die Führungsbahn 34 insbesondere der Lauffläche des Hinterrades 18 des Laufrads 10 vorgeordnet ist (vgl. etwa Fig. 1A, Fig. 2).

In einem zweiten Schritt S2 erfolgt ein Vorspannen und/oder ein Arretieren eines Bremselements 36, welches durch einen Bremskeil 38 ausgebildet ist. Der Bremskeil 38 ist in Laufrichtung L zwischen der Lauffläche eines Hinterrades 18 des Laufrades 10 und der Führungsbahn 34 angeordnet ist, wobei das vorgespannte und/oder arretierte Bremselement 36 das Hinterrad 18 freigibt (vgl. auch Fig. 1A, Fig. 1B und Fig. 2).

In einem nächsten Schritt S3 erfolgt das Einleiten eines Bremsvorgangs durch Betätigen einer Fernsteuerung, so dass der Bremskeil 38 aus der vorgespannten und/oder arretierten Position gelöst wird und entlang der Führungsbahn 34 und der Lauffläche des Hinterrades 18 gleitet. Insbesondere verkeilt sich der Bremskeil 38 zwischen der Lauffläche des Hinterrades 18 und der Führungsbahn 34 und übt eine Bremskraft auf das Hinterrad 18 aus, bis dieses zum Stillstand kommt.

Um mit dem Laufrad 10 wieder fahren zu können, muss der Bremskeil 38 manuell arretiert und/oder vorgespannt werden, was in Fig. 3 durch einen letzten Schritt S4 gekennzeichnet ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 10: Laufrad
- 12: Rad
- 14: Rad
- 16: Vorderrad
- 18: Hinterrad
- 20: Achse
- 20': Achse
- 22: Rahmen
- 24: Lenkeinheit
- 26: Lenker
- 28: Sitzfläche
- 30: Sattel
- 32: Bremsvorrichtung
- 34: Führungsbahn
- 36: Bremselement
- 38: Bremskeil
- 40: elastisch verformbares Mittel
- 42: Feder
- 44: Haltevorrichtung
- 46: Schraube
- 48: Mutter
- 50: Gehäuse
- 52: weitere Schraube

- L: Laufrichtung
- E: Empfängereinheit
- S: Sendeeinheit

- S1: erster Schritt (des Verfahrens)
- S2: zweiter Schritt (des Verfahrens)
- S3: dritter Schritt (des Verfahrens)
- S4: vierter Schritt (des Verfahrens)

## Patentansprüche

1. Ferngesteuerte Bremsvorrichtung (32) für zumindest zwei- oder mehrrädrige Fahrzeuge, umfassend zumindest:
- eine an einem Rahmen (22) des Fahrzeuges angeordnete Führungsbahn (34), welche in Laufrichtung (L) zur Lauffläche zumindest eines Rades des Fahrzeuges vorgeordnet ist,
- ein arretierbares und/oder aus einer arretierten Position lösbares Bremselement (36), welches in Laufrichtung (L) zwischen der Lauffläche des zumindest einen Rades und der zumindest einen Führungsbahn (34) beweglich angeordnet ist,
wobei das zumindest eine Bremselement (36) in seiner arretierten Position das zumindest eine Rad freigibt, und wobei das zumindest eine Bremselement (36) aus der arretierten Position mittels Fernsteuerung lösbar ist, so dass das zumindest eine Bremselement (36) entlang der zumindest einen Führungsbahn (34) und der Lauffläche des zumindest einen Rades gleitet und eine Bremskraft auf das zumindest eine Rad des Fahrzeuges ausübt.

2. Bremsvorrichtung nach Anspruch 1, bei welcher das zumindest eine Bremselement (36) in der arretierten Position, insbesondere mit einem elastisch verformbaren Mittel (40), vorspannbar ausgebildet ist.

3. Bremsvorrichtung nach Anspruch 1 oder 2, wobei das zumindest eine Bremselement (36) als Bremskeil (38) oder als Bremsklotz oder dergleichen ausgebildet ist.

4. Bremsvorrichtung nach einem der vorherigen Ansprüche, bei welcher die zumindest eine Führungsbahn (34) zumindest weitgehend parallel zu einer Senkrechten beabstandet angeordnet ist, welche Senkrechte zumindest weitgehend senkrecht durch eine Achse des zumindest einen Rades geht.

5. Bremsvorrichtung nach einem der vorherigen Ansprüche, bei welcher die zumindest eine Führungsbahn (34) zumindest weitgehend tangential zu einer Lauffläche des zumindest einen Rades angeordnet ist, so dass zwischen der zumindest einen Führungsbahn (34) und der Lauffläche des zumindest einen Rades ein spitzer Winkel ausgebildet wird.

6. Bremsvorrichtung nach einem der vorherigen Ansprüche, welche ein Gehäuse (50) umfasst, welches zumindest abschnittsweise um die zumindest eine Führungsbahn (34) und das zumindest eine Bremselement (36) angeordnet ist.

7. Bremsvorrichtung nach einem der vorherigen Ansprüche, welche wenigstens eine Haltevorrichtung (44) umfasst, mittels welcher das zumindest eine Bremselement (36) und/oder die zumindest eine Führungsbahn (34) und/oder das Gehäuse (50) am Rahmen (22) des Fahrzeugs befestigbar sind.

8. Bremsvorrichtung nach einem der vorherigen Ansprüche, bei welcher die Fernsteuerung zumindest eine Empfängereinheit (E) und zumindest eine Sendeeinheit (S) umfasst.

9. Bremsvorrichtung nach einem der vorherigen Ansprüche, bei welcher die zumindest eine Empfängereinheit (E) dem zumindest einen Bremselement (36) zugeordnet ist.

10. Bremsvorrichtung nach einem der vorherigen Ansprüche, bei welcher die zumindest eine Sendeeinheit (S) mit der Empfängereinheit (E) drahtlos verbunden ist.

11. Verfahren zur Einleitung und/oder Durchführung eines ferngesteuerten Bremsvorganges eines zumindest zwei- oder mehrrädrigen Fahrzeuges, welches zumindest die folgenden Schritte umfasst:
- Bereitstellen und Anordnen zumindest einer Führungsbahn (34) an einem Rahmen (22) des Fahrzeuges, welche in Laufrichtung (L) zur Lauffläche zumindest eines Rades des Fahrzeuges vorgeordnet ist;
- Vorspannen und/oder Arretieren zumindest eines Bremselements (36), welches in Laufrichtung (L) zwischen der Lauffläche des zumindest einen Rades und der zumindest einen Führungsbahn (34) angeordnet ist, so dass das vorgespannte und/oder arretierte Bremselement (36) das zumindest eine Rad freigibt,
- Einleiten eines Bremsvorganges des Fahrzeuges durch Betätigen einer Fernsteuerung, so dass das zumindest eine Bremselement (36) aus der arretierten Position gelöst wird und entlang der zumindest einen Führungsbahn (36) und der Lauffläche des zumindest einen Rades gleitet.

12. Verfahren nach Anspruch 11, bei welcher das Bremselement (36) zeitlich nach einem Bremsvorgang manuell vorgespannt und/oder arretiert wird.

13. Fahrzeug, insbesondere Laufrad, Fahrrad, Dreirad, Roller, Kinderwagen oder Einkaufswagen oder dergleichen, welches mit einer ferngesteuerten Bremsvorrichtung (32) gemäß Anspruch 1 ausgestattet ist.
